# FASCICULE DE BREVET EUROPEEN

(11) **EP 2 068 408 B1**
(45) Date de publication et mention de la délivrance du brevet: **30.06.2010**
(21) Numéro de dépôt: 08291056.3
(22) Date de dépôt: 12.11.2008
(51) Int. Cl.: H02G 3/06

(54) **Accessoire d'angle pour goulottes**
Winkelelement für Ablaufrinnen
Corner accessory for gutters

(30) Priorité: 06.12.2007 FR 0708521
(43) Date de publication de la demande: 10.06.2009
(73) Titulaire: Legrand France, 87000 Limoges (FR)
(72) Inventeur: Wents, Thierry, 72650 La Bazoge (FR)
(74) Mandataire: Orsini, Fabienne

(56) Documents cités:
- EP-A- 1 178 251
- DE-U1-202005 012 520

## Description

### DOMAINE TECHNIQUE AUQUEL SE RAPPORTE L'INVENTION

La présente invention concerne de manière générale les goulottes du type de celles mises en oeuvre, par exemple, pour le support, le logement et la protection de divers appareillages, tels que des appareillages électriques, aussi bien que pour le support, le logement et la protection des câbles, conducteurs, canalisations ou autres équipements nécessaires à la desserte de ces appareillages.

Elle concerne plus particulièrement un accessoire d'angle à disposer à la jonction d'au moins deux goulottes d'orientations différentes, comprenant deux volets distincts dont l'un comporte un élément saillant et dont l'autre comporte une ouverture allongée, ledit élément saillant étant engagé dans ladite ouverture allongée de manière à naviguer suivant une direction longitudinale de ladite ouverture pour autoriser un déplacement relatif desdits volets l'un par rapport à l'autre.

L'invention trouve une application particulièrement avantageuse dans la réalisation d'accessoires d'angle intérieur ou extérieur pour goulottes.

### ARRIERE-PLAN TECHNOLOGIQUE

On connaît déjà notamment du document EP 1 178 251, un accessoire d'angle de ce type dont un volet porte, sur la face intérieure de ses retours en vis-à-vis, des tétons engagés dans des ouvertures oblongues en arc de cercle, au contour fermé, prévues dans les retours en vis-à-vis de l'autre volet.

L'assemblage des volets entre eux est réalisé en pinçant légèrement les retours du volet portant lesdites ouvertures pour les déformer élastiquement et engager lesdites ouvertures sur lesdits tétons.

Un tel accessoire présente plusieurs inconvénients.

Tout d'abord l'assemblage des deux volets de l'accessoire est délicat car il nécessite une déformation desdits volets et l'alignement en aveugle des tétons et des ouvertures respectifs.

En outre, afin de limiter la déformation nécessaire du volet comportant lesdites ouvertures et faciliter ainsi l'assemblage des volets, les tétons prévus sur l'autre volet présentent une hauteur diminuée. Ainsi, lorsqu'un choc intervient sur lesdits volets, il provoque facilement la sortie des tétons desdites ouvertures et donc le désassemblage des volets.

### OBJET DE L'INVENTION

Afin de remédier aux inconvénients précités de l'état de la technique, l'invention propose un accessoire d'angle dont les volets sont agencés de manière à faciliter leur assemblage tout en évitant qu'un choc intervenant sur lesdits volets provoque leur désassemblage quelle que soit leur position relative d'utilisation.

Plus particulièrement, on propose selon l'invention un accessoire d'angle selon la revendication 1.

D'autres caractéristiques non limitatives et avantageuses de l'accessoire d'angle selon l'invention sont énoncées dans les revendications 2 à 13.

### DESCRIPTION DETAILLEE D'UN EXEMPLE DE REALISATION

La description qui va suivre en regard des dessins annexés, donnée à titre d'exemple non limitatif, fera bien comprendre en quoi consiste l'invention et comment elle peut être réalisée.

Sur les dessins annexés :
- la figure 1 est une vue schématique du côté intérieur de l'accessoire d'angle selon l'invention disposé à la jonction de deux goulottes d'orientations différentes ;
- la figure 2A est une vue schématique en perspective du côté extérieur d'un des volets de l'accessoire d'angle de la figure 1 ;
- la figure 2B est une vue schématique en perspective du côté intérieur du volet de la figure 2A ;
- la figure 3 est une vue en coupe selon le plan A-A de l'accessoire de la figure 2A ;
- la figure 4A est une vue schématique en perspective du côté extérieur de l'autre des volets de l'accessoire d'angle de la figure 1 ;
- la figure 4B est une vue schématique en perspective du côté intérieur du volet de la figure 4A ; et
- les figures 5A et 5B sont des vues schématiques d'assemblage des deux volets des figures 2A et 4A vus du côté intérieur.

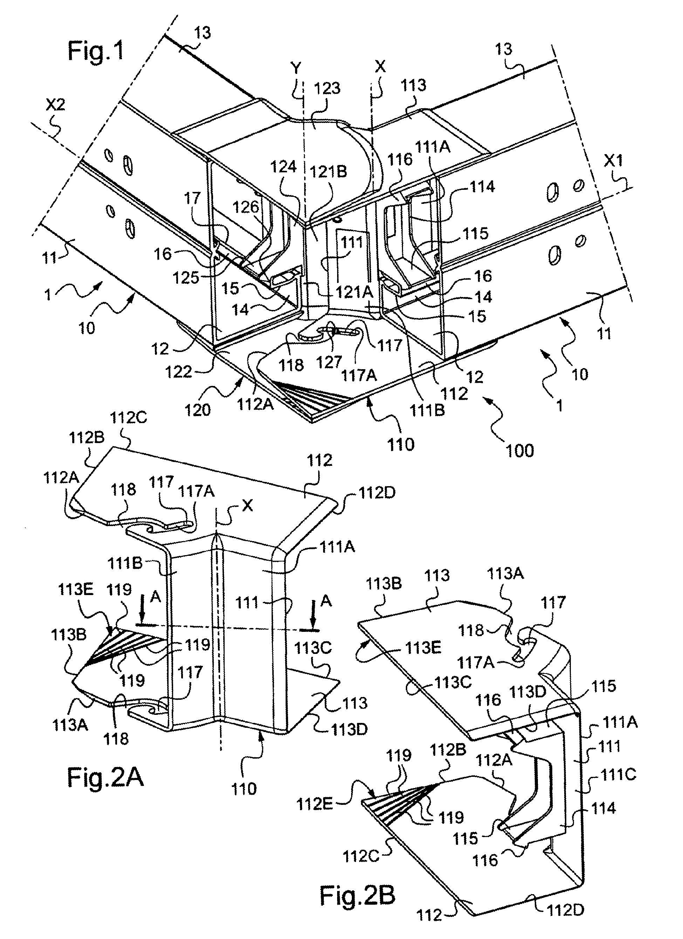

Sur la figure 1, on a représenté un accessoire d'angle 100 disposé à la jonction de deux goulottes 1 d'orientations X1, X2 différentes.

Ici, cet accessoire d'angle 100 est un accessoire d'angle intérieur particulièrement adapté à joindre deux goulottes 1 faisant, en pratique, un angle entre elles compris entre 60 et 95° et préférentiellement égal à 90°.

En considérant deux parois (non représentées) formant un dièdre rentrant entre elles, les socles 10 des deux goulottes 1 sont chacun respectivement disposés à plat sur ces deux parois, en courant par exemple en plinthe à la base de celle-ci.

Les socles 10 des goulottes 1 sont coupés et sont positionnés bord à bord, de manière pratiquement jointive au niveau de leur fond, pour former sensiblement l'angle rentrant que forment les parois supports entre elles.

Ici, comme le montre plus particulièrement la figure 1, les socles 10 des goulottes 1 ont une section transversale globalement en forme de U avec un fond 11 et deux ailes latérales 12, 13 parallèles qui s'élèvent perpendiculairement audit fond 11 et qui bordent celui-ci.

Entre les deux ailes latérales 12, 13 de chaque socle 10 sont définis une ouverture longitudinale ainsi qu'un espace de réception de divers câbles et appareillages électriques.

L'ouverture longitudinale de chaque socle 10 est fermée par des tronçons de couvercle (non visible sur la figure 1) qui comprennent des pattes d'encliquetage sur des aménagements intérieurs du socle 10.

À cet effet, selon l'exemple représenté sur la figure 1, les deux ailes latérales 12, 13 de chaque socle 10 portent en tête des retours 14 dirigés l'un vers l'autre qui s'étendent sensiblement parallèlement audit fond 11 dans le même plan que les tronçons de couvercle.

En outre, l'ouverture longitudinale de chaque socle 10 de chaque goulotte 1 est bordée par deux parois longitudinales rentrantes 15, parallèles entre elles et aussi parallèles aux deux parois latérales 12, 13 du socle 10. Chaque paroi rentrante 15 est rattachée au bord libre d'un retour 14 en étant perpendiculaire à celui-ci. L'ouverture longitudinale est munie de deux bandes de clipsage aptes à permettre le montage des tronçons de couvercle.

En particulier, chaque bande de clipsage comporte ici une aile longitudinale 17 rattachée par une entretoise 16 à l'extrémité intérieure libre de la paroi rentrante 15 correspondante. Cette entretoise 16 définit avec ladite aile longitudinale 17 et la paroi rentrante 16, une gorge longitudinale ouverte vers l'avant du socle 10 de la goulotte 1.

Chaque tronçon de couvercle (non visible sur la figure 1) porte perpendiculairement sur sa face arrière, en parallèle, le long de chacun de ses deux bords longitudinaux, d'une part, une rangée de pattes d'engagement destinées à s'engager dans la gorge longitudinale correspondante du socle 10, et, d'autre part, une rangée de pattes d'encliquetage destinées à s'accrocher sous cette gorge longitudinale.

L'accessoire d'angle 100 est un cache qui se substitue localement au tronçon de couvercle de chaque goulotte 1, en recouvrant l'extrémité coupée des ailes latérales 12, 13 desdits socles 10 et des retours 14 correspondants. Il recouvre également, préférentiellement, l'extrémité coupée desdits tronçons de couvercle.

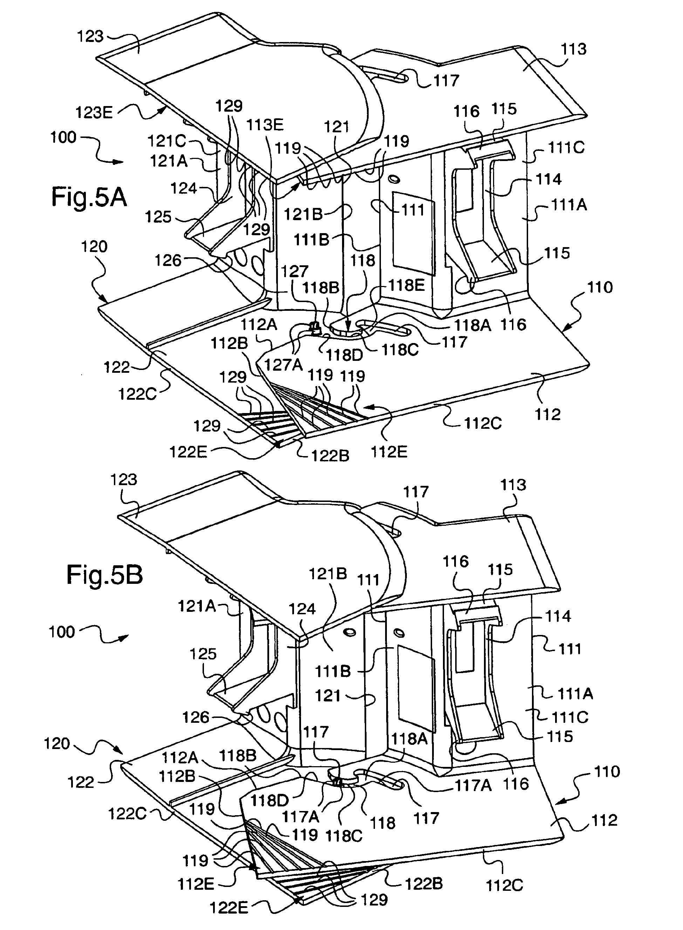

Comme le montrent plus particulièrement les figures 1, 5A et 5B, l'accessoire d'angle 100 comporte deux volets 110, 120 distincts assemblés entre eux de manière à autoriser un déplacement d'un volet par rapport à l'autre.

Chaque volet 110 ; 120 est avantageusement réalisé d'une seule pièce par moulage d'une matière plastique.

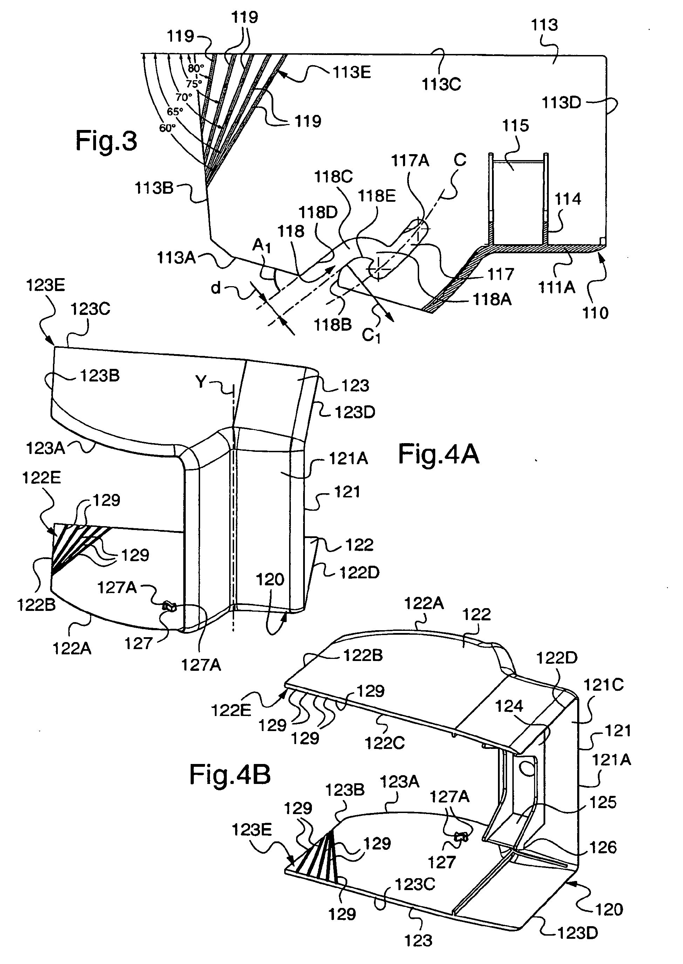

Il présente un profil en U avec une joue 111 ; 121 bordée, sur deux côtés opposés, de deux ailes 112, 113 ; 122, 123 en vis-à-vis, sensiblement à l'équerre de ladite joue 111 ; 121 (voir figures 2B, 4B).

La joue 111 ; 121 de chaque volet 110 ; 120 comporte deux panneaux 111A, 111B ; 121A, 121B dont un panneau 111A ; 121A externe destiné à recouvrir l'extrémité coupée d'un tronçon de couvercle d'une des goulottes 1 et un panneau 111 B ; 121 B interne au moins en partie superposé au panneau interne de l'autre volet pour fermer l'angle formé entre lesdites goulottes 1 (voir figure 1) et assurer ainsi une continuité de couvercles entre les tronçons de couvercle desdites goulottes 1.

Les deux panneaux 111A, 111B ; 121A, 121B de chaque joue 111 ; 121 sont jointifs suivant un axe X ; Y perpendiculaire auxdites ailes 112, 113 ; 122, 123 et forment un angle entre eux (voir figures 2A et 4A).

Les ailes 112, 113 ; 122, 123 en vis-à-vis de chaque volet 110 ; 120 présentent une forme globalement rectangulaire avec quatre bords libres 112A, 112B, 112C, 112D, 113A, 113B, 113C, 113D ; 122A, 122B, 122C, 122D, 123A, 123B, 123C, 123D et un bord lié au côté correspondant de ladite joue 111 ; 121 (voir figures 2A, 2B, 4A, 4B).

Les ailes 112, 113 ; 122, 123 en vis-à-vis de chaque volet 110 ; 120 sont destinées à recouvrir partiellement les ailes latérales 12, 13 des socles 10 des goulottes 1 disposées en angle. En outre, les ailes 112, 113 d'un volet 110 sont en partie superposées aux ailes 122, 123 de l'autre volet 120 pour assurer dans l'angle formé par lesdites goulottes 1 une continuité d'ailes latérales entre lesdites goulottes.

Comme le montrent les figures 1, 2B, 4B, 5A, 5B, les joues 111 ; 121 desdits volets 110 ; 120 comportent sur leur face intérieure des moyens d'assujettissements qui sont propres au maintien des volets par rapport aux goulottes 1.

Plus particulièrement, le panneau 111A ; 121A externe de la joue 111 ; 121 de chaque volet 110 ; 120 porte sur sa face intérieure 111C ; 121C un profilé 114 en U qui comporte deux branches 115 ; 125 parallèles qui s'élèvent perpendiculairement à la face intérieure 111C ; 121C dudit panneau 111A ; 121A externe. Les deux branches 115 ; 125 de chaque profilé 114 ; 124 portent sur des faces opposées, deux dents 116 ; 126 destinées à s'accrocher derrière les entretoises 16, sous les gorges longitudinales du socle 10 de la goulotte 1 correspondante (voir figure 1).

L'un des volets 110 s'accroche ainsi sur le socle 10 d'une goulotte 1 tandis que l'autre des volets 120 s'accroche sur le socle 10 de l'autre goulotte 1.

Selon une caractéristique particulièrement avantageuse de l'accessoire d'angle 100, l'un de ses volets 120 comporte un élément saillant 127 et l'autre volet 110 comporte une ouverture 117 allongée, ledit élément saillant 127 étant engagé dans ladite ouverture 117 allongée de manière à naviguer suivant une direction longitudinale C de ladite ouverture 117 pour autoriser un déplacement relatif desdits volets 110 ; 120 l'un par rapport à l'autre.

Selon une caractéristique essentielle, ladite ouverture 117 allongée comporte un bord longitudinal 117A, parallèle à la direction longitudinale C de ladite ouverture 117, ouvert localement sur une fente 118 qui débouche sur un des bords libres 113A dudit volet 110 (voir figure 3).

Ledit élément saillant 127 est prévu sur la face intérieure 122E d'une aile 122 du volet 120 qui recouvre partiellement l'aile 112 pourvue de ladite ouverture 117 allongée de l'autre volet 110.

Ici, comme le montrent les figures, l'un 120 desdits volets porte, sur les faces intérieures 122E, 123E en regard de ses deux ailes 122, 123, deux éléments saillants 127 en vis-à-vis, et l'autre 110 desdits volets comporte, en correspondance, dans ses deux ailes 112, 113 en vis-à-vis, lesdites ouvertures 117 allongées ouvertes par lesdites fentes 118 sur des bords libres 112A ; 113A du volet 110 recouverts par les ailes 122, 123 du premier volet 120 (voir figures 1, 5A, 5B).

Comme le montre plus particulièrement la figure 3, selon l'exemple représenté, chaque fente 118 comporte une partie d'extrémité 118A qui débouche au droit dudit bord longitudinal 117A de ladite ouverture 117 allongée de l'aile 113 correspondante.

Chaque fente 118 débouche à un endroit de ladite ouverture 117 allongée où, une fois inséré dans ladite ouverture 117, l'élément saillant 127 ne peut plus en sortir lors de son déplacement en vue de l'ajustement de la position relative des deux volets 110 ; 120. Ainsi, chaque fente 118 ne débouche pas au milieu du bord longitudinal 117A de ladite ouverture 117 mais environ au tiers de sa longueur.

En outre, chaque fente 117 comporte une autre partie d'extrémité 118B évasée qui débouche sur ledit bord libre 113A du volet 110. Cette partie d'extrémité 118B évasée forme un entonnoir qui facilite l'introduction de l'élément saillant 117 correspondant dans la fente 118.

Entre ses deux parties d'extrémités 118A, 118B débouchantes, chaque fente 118 suit un arrondi 118C. L'arrondi 118C de chaque fente 118 est délimité par un bord extrados 118D et un bord intrados 118E de la fente.

À la jonction avec le bord libre 113A dudit volet 110, ledit bord extrados 118D s'étend suivant une direction oblique qui forme un angle A1 aigu avec ledit bord libre 113A. L'angle formé entre le bord extrados 118D de chaque fente 118 et le bord libre 113A dudit volet 110 est préférentiellement compris entre 50 et 60°. L'arrondi 118C de chaque fente présente une courbure C1 orientée vers l'intérieur dudit volet, c'est-à-dire vers ledit bord libre 113A du volet du côté de la face intérieure 111C de la joue 111.

Avantageusement, comme le montre la figure 3, la direction longitudinale de chaque ouverture 117 allongée s'étend ici suivant un arc de cercle C orienté vers un coin externe du volet 110. Ainsi, les courbures C1, C de l'arrondi 118C de la fente 118 et de l'ouverture 117 allongée correspondante présentent des orientations opposées.

Chaque ouverture 117 allongée présente ici préférentiellement une forme oblongue.

La largeur de chaque ouverture 117 allongée est identique à la largeur d de la fente 18 correspondante.

Cette largeur d est adaptée à celle de l'élément saillant 127 de manière que lors de son déplacement dans ladite fente 118 puis dans ladite ouverture 117, il glisse sur les bords 118D, 118E, 117A de celles-ci.

La largeur d est ici égale à environ 10 mm.

Chaque élément saillant 127 est un plot dont la forme s'inscrit dans un cercle de diamètre égal au jeu près à environ 10 mm. Il présente une hauteur sensiblement égale ou légèrement supérieure à l'épaisseur de l'aile 113 correspondante du volet 110 qui comporte l'ouverture 117 allongée dans laquelle il va naviguer. En outre, il présente latéralement deux ailes 127A à la surface arrondie destinées à glisser le long des bords 118D, 118E, 117A de la fente 118 et de l'ouverture 117 allongée de l'aile 113 correspondante du volet 110.

Par ailleurs, comme le montrent les figures 2A, 2B, 3, 4A, 4B, 5A et 5B, chaque volet 110 ; 120 comporte sur la face intérieure 112E, 113E ; 122E, 123E de chacune de ses ailes 112, 113 ; 122, 123, dans un coin superposé au coin correspondant d'une des ailes de l'autre volet, des rainures d'affaiblissement 119 ; 129 facilitant la découpe d'une partie de l'aile correspondante.

Ces rainures d'affaiblissement 119 ; 129 s'étendent d'un bord libre 112B, 113B ; 122B, 123B à un autre bord libre 112C, 113C ; 122C, 123C adjacent délimitant ledit coin de l'aile 112, 113 ; 122, 123 correspondante du volet 110 ; 120. Chacune de ces rainures d'affaiblissement 119 forme avec l'un desdits bords libres 113C, qui est opposé au bord libre 113A sur lequel débouche ladite fente 118, un angle aigu particulier (voir figure 3). Ainsi, ici, il est prévu pour chaque aile de chaque volet 110 ;120, cinq rainures d'affaiblissement 119 ; 129 disposées suivant les angles aigus suivants : 60°, 65°, 70°, 75° et 80°. Ces angles correspondent à différentes orientations angulaires relatives pouvant être prises par lesdits volets 110 ; 120 de l'accessoire d'angle 100 pour s'adapter aux deux goulottes 1 accolées en angle.

Comme le montrent les figures 5A et 5B, l'assemblage des deux volets 110 ; 120 de l'accessoire d'angle 100 s'effectue simplement en engageant les ailes 122, 123 du volet 120 portant intérieurement lesdits éléments saillants 127 sur les ailes 112, 113 du volet 110 comportant lesdites ouvertures 117 allongées. De cette manière, chaque élément saillant 127 s'engage facilement dans l'embouchure 118B en forme d'entonnoir de chaque fente 118 correspondante et est guidé par le bord extrados 118D oblique de celle-ci jusqu'à l'arrondi 118C puis jusqu'à l'ouverture 117 allongée correspondante.

Lorsque les deux éléments saillants 127 sont engagés dans les ouvertures 117 allongées, les panneaux 111B ; 121B internes des joues 111 ; 121 des volets 110 ; 120 se recouvrent partiellement pour fermer l'angle formé entre lesdits volets 110 ; 120. Il suffit alors de faire coulisser lesdits éléments saillants 127 dans lesdites ouvertures 117 allongées pour déplacer les volets 110 ; 120 l'un par rapport à l'autre suivant l'arc de cercle C et faire varier la surface de recouvrement desdits panneaux 111B ; 121B internes. De cette manière, on fait varier l'angle formé entre lesdits volets afin d'ajuster l'ouverture de l'accessoire d'angle 100 à l'angle formé par lesdites goulottes 1 à la jonction desquelles il doit être rapporté.

Lorsque l'angle formé par l'accessoire d'angle 100 est fixé, les parties correspondantes des ailes 112, 113 ; 122, 123 des volets 110 ; 120 sont découpées ou cassées le long d'une rainure d'affaiblissement 119 ; 129 afin que les coins tronqués dudit accessoire d'angle 100 s'appuient correctement contre les parois supportant lesdites goulottes 1.

La présente invention n'est nullement limitée au mode de réalisation décrit et représenté, mais l'homme du métier saura y apporter toute variante conforme à son esprit.

## Revendications

1. Accessoire d'angle (100) à disposer à la jonction d'au moins deux goulottes (1) d'orientations différentes, comprenant deux volets (110, 120) distincts dont l'un comporte un élément saillant (127) et dont l'autre comporte une ouverture (117) allongée, ledit élément saillant (127) étant engagé dans ladite ouverture (117) allongée de manière à naviguer suivant une direction longitudinale de ladite ouverture pour autoriser un déplacement relatif desdits volets l'un par rapport à l'autre, **caractérisé en ce que** ladite ouverture (117) allongée comporte un bord longitudinal (117A), parallèle à ladite direction longitudinale, ouvert localement sur une fente (118) qui débouche sur un bord libre (112A) dudit volet (110).

2. Accessoire d'angle (100) selon la revendication 1, **caractérisé en ce que** ladite fente (118) comporte une partie d'extrémité (118A) qui débouche au droit dudit bord longitudinal (117A) de ladite ouverture (117) allongée.

3. Accessoire d'angle (100) selon l'une des revendications précédentes, **caractérisé en ce que** ladite fente (118) comporte une partie d'extrémité (118B) évasée qui débouche sur ledit bord libre (112A) du volet (110).

4. Accessoire d'angle (100) selon l'une des revendications précédentes, **caractérisé en ce qu'**entre ses deux parties d'extrémités (118A,118B) débouchantes, ladite fente (118) suit un arrondi (118C).

5. Accessoire d'angle (100) selon la revendication précédente, **caractérisé en ce que** ladite fente (118) comporte un bord extrados (118D) qui, à la jonction avec le bord libre (112A) dudit volet (110), s'étend suivant une direction qui forme un angle (A1) aigu avec ledit bord libre (112A).

6. Accessoire d'angle (100) selon la revendication précédente, **caractérisé en ce que** l'angle (A1) formé entre le bord extrados (118D) de ladite fente (118) et le bord libre (112A) dudit volet (110) est compris entre 50 et 60 degrés.

7. Accessoire d'angle (100) selon l'une des trois revendications précédentes, **caractérisé en ce que** l'arrondi (118C) de la fente (118) présente une courbure (C1) orientée vers l'intérieur dudit volet (110).

8. Accessoire d'angle (100) selon l'une des revendications précédentes, **caractérisé en ce que** ladite direction longitudinale de l'ouverture allongée s'étend suivant un arc de cercle (C) orienté vers un coin externe du volet (110).

9. Accessoire d'angle (100) selon les revendications 7 et 8, **caractérisé en ce que** l'arrondi (118C) de ladite fente (118) et l'ouverture (117) allongée présentent des courbures (C1,C) orientées dans des directions opposées.

10. Accessoire d'angle (100) selon l'une des revendications précédentes, **caractérisé en ce que** ladite ouverture (117) allongée présente une largeur adaptée à celle de l'élément saillant (127) de manière que lors de son déplacement dans ladite ouverture, il glisse sur les bords longitudinaux de celle-ci.

11. Accessoire d'angle (100) selon l'une des revendications précédentes, **caractérisé en ce que** chaque volet (110 ;120) comporte une joue (111 ;121) bordée, sur deux côtés opposés, de deux ailes (112,113 ; 122,123) en vis-à-vis, sensiblement à l'équerre de ladite joue (111 ; 121), ledit élément saillant (127) étant prévu sur la face intérieure (122E) d'une aile (122) du volet (120) qui recouvre partiellement l'aile (112) pourvue de ladite ouverture (117) allongée de l'autre volet (110).

12. Accessoire d'angle (100) selon l'une des revendications précédentes, **caractérisé en ce que** l'un (120) desdits volets porte, sur les faces intérieures (122E,123E) en regard de ses ailes (122,123), deux éléments saillants (127) en vis-à-vis, et l'autre (110) desdits volets comporte, en correspondance, dans ses ailes (112,113), lesdites ouvertures (117) allongées ouvertes par lesdites fentes (118) sur des bords libres (112A,113A) du volet recouverts par les ailes (122,123) du premier volet (120).

13. Accessoire d'angle (100) selon l'une des revendications précédentes, **caractérisé en ce que** chaque volet (110 ; 120) comporte sur la face intérieure (112E,113E ; 122E,123E) de chacune de ses ailes (112,113 ; 122,123), dans un coin superposé au coin correspondant d'une des ailes de l'autre volet, des rainures d'affaiblissement (119 ; 129) facilitant la découpe d'une partie de l'aile correspondante.

## Claims

1. A corner accessory (100) for placing at the junction between at least two ducts (1) that extend in different directions, the accessory comprising two distinct flaps (110, 120), one of which has a projecting element (127) and the other of which includes an elongate opening (117), said projecting element (127) being engaged in said elongate opening (117) so as to move along a longitudinal direction of said opening to allow said flaps to move relative to each other, the accessory being **characterized in that** said elongate opening (117) has a longitudinal edge (117A) parallel to said longitudinal direction and opening out locally to a slot (118) that opens out into a free edge (112A) of said flap (110).

2. A corner accessory (100) according to claim 1, **characterized in that** said slot (118) has an end portion (118A) that opens out into said longitudinal edge (117A) of said elongate opening (117).

3. A corner accessory (100) according to either preceding claim, **characterized in that** said slot (118) has a flared end portion (118B) that opens out into said free edge (112A) of the flap (110).

4. A corner accessory (100) according to any preceding claim, **characterized in that** between its two open end portions (118A, 118B), said slot (118) follows a rounded path (118C).

5. A corner accessory (100) according to the preceding claim, **characterized in that** said slot (118) has an outer edge (118D) that, at the junction with the free edge (112A) of said flap (110), extends in a direction that forms an acute angle (A1) relative to said free edge (112A).

6. A corner accessory (100) according to the preceding claim, **characterized in that** the angle (A1) forms between the outer edge (118D) of said slot (118) and the free edge (112A) of said flap (110) lies in the range 50 degrees to 60 degrees.

7. A corner accessory (100) according to any one of the three immediately preceding claims, **characterized in that** the rounded edge (118C) of the slot (118) presents curvature (C1) directed towards the inside of said flap (110).

8. A corner accessory (100) according to any preceding claim, **characterized in that** said longitudinal direction of the elongate opening extends along a circular arc (C) directed towards an outside corner of the flap (110).

9. A corner accessory (100) according to claims 7 and 8, **characterized in that** the rounded path (118C) of said slot (118), and the elongate opening (117) present respective curvatures (C1, C) directed in opposite directions.

10. A corner accessory (100) according to any preceding claim, **characterized in that** said elongate opening (117) presents a width that matches the width of the projecting element (127) in a manner such that, as it moves in said opening, it slides against the longitudinal edges thereof.

11. A corner accessory (100) according to any preceding claim, **characterized in that** each flap (110; 120) comprises a web (111; 121) between two facing flanges (112 & 113; 122 & 123) on two opposite sides extending substantially at right angles to said web (111; 121), said projecting element (127) being provided on the inside face (122E) of a flange (122) of the flap (120) that partially covers the flange (112) provided with said elongate opening (117) of the other flap (110).

12. A corner accessory (100) according to any preceding claim, **characterized in that,** on the facing inside faces (122E, 123E) of its flanges (122, 123), one of said flaps (120) carries two facing projecting elements (127), and in correspondence therewith, in its flanges (112, 113), the other of said flaps (110) includes said elongate openings (117) that are open via said slots (118) to the free edges (112A, 113A) of the flap that are covered by the flanges (122, 123) of the first flap (120).

13. A corner accessory (100) according to any preceding claim, **characterized in that** each flap (110; 120) includes weakening grooves (119; 129) in the inside face (112E & 113E; 122E & 123E) of each of its flanges (112 & 113; 122 & 123) in a corner that superposes the corresponding corner of one of the flanges of the other flap, the weakening grooves (119; 129) making it easier to cut off a portion of the corresponding flange.

## Patentansprüche

1. Winkelzubehör (100) zum Anbringen an der Verbindung von mindestens zwei verschieden orientierten Kabelkanälen (1), mit zwei separaten Verschlussblenden (110, 120), von denen eine ein hervorstehendes Element (127) umfasst und die andere eine längliche Öffnung (117), wobei das hervorstehende Element (127) derart in die längliche Öffnung (117) eingreift, dass es sich entlang der Längsrichtung der Öffnung bewegen kann und eine relative Bewegung dieser Verschlussblenden zueinander ermöglicht, **dadurch gekennzeichnet, dass** die längliche Öffnung (117) einen Längsrand (117A) umfasst, der zur Längsrichtung parallel ist und sich begrenzt zu einem Schlitz (118) öffnet, der in den freiliegenden Rand (112A) der Verschlussblende (110) mündet.

2. Winkelzubehör (100) nach Anspruch 1, **dadurch gekennzeichnet, dass** der Schlitz (118) einen Endabschnitt (118A) umfasst, der gerade in den Längsrand (117A) der länglichen Öffnung (117) mündet.

3. Winkelzubehör (100) nach einem der vorausgehenden Ansprüche, **dadurch gekennzeichnet, dass** der Schlitz (118) einen erweiterten Endabschnitt (118B) umfasst, der in den freiliegenden Rand (112A) der Verschlussblende (110) mündet.

4. Winkelzubehör (100) nach einem der vorausgehenden Ansprüche, **dadurch gekennzeichnet, dass** der Schlitz (118) zwischen diesen beiden mündenden Endabschnitten (118A, 118B) einer Rundung (118C) folgt.

5. Winkelzubehör (100) nach vorausgehendem Anspruch, **dadurch gekennzeichnet, dass** der Schlitz (118) einen äußeren Bogenrand (118D) umfasst, der sich am Übergang zum freiliegenden Rand (112A) der Verschlussblende (110) entlang einer Richtung erstreckt, die mit dem freiliegenden Rand (112A) einen spitzen Winkel (A1) bildet.

6. Winkelzubehör (100) nach vorausgehendem Anspruch, **dadurch gekennzeichnet, dass** der Winkel (A1) zwischen dem äußeren Bogenrand (118D) des Schlitzes (118) und dem freiliegenden Rand (112A) der Verschlussblende (110) zwischen 50 und 60 Grad beträgt.

7. Winkelzubehör (100) nach einem der drei vorausgehenden Ansprüche, **dadurch gekennzeichnet, dass** die Rundung (118C) des Schlitzes (118) eine zur Innenseite der Verschlussblende (110) gerichtete Wölbung (C1) aufweist.

8. Winkelzubehör (100) nach einem der vorausgehenden Ansprüche, **dadurch gekennzeichnet, dass** sich die Längsrichtung der länglichen Öffnung entlang einem zu einer externen Ecke der Verschlussblende (110) gerichteten Kreisbogen (C) erstreckt.

9. Winkelzubehör (100) nach den Ansprüchen 7 und 8, **dadurch gekennzeichnet, dass** die Rundung (118C) des Schlitzes (118) und die längliche Öffnung (117) in entgegengesetzte Richtungen orientierte Wölbungen (C1,C) aufweisen.

10. Winkelzubehör (100) nach einem der vorausgehenden Ansprüche, **dadurch gekennzeichnet, dass** die längliche Öffnung (117) eine Breite aufweist, die der des hervorstehenden Elementes (127) angepasst ist, sodass das Element bei seiner Bewegung in der Öffnung an deren Längsrändern entlang gleitet.

11. Winkelzubehör (100) nach einem der vorausgehenden Ansprüche, **dadurch gekennzeichnet, dass** jede Verschlussblende (110,120) eine Backe (111, 121) umfasst, die an zwei gegenüberliegenden Seiten mit zwei gegenüberliegenden Flügeln (112,113; 122,123) berandet ist, die im wesentlichen zur Backe (111,121) senkrecht stehen, wobei das hervorstehende Element (127) an der Innenseite (122E) eines Flügels (122) der Verschlussblende (120) vorgesehen ist, die den Flügel (112) mit der länglichen Öffnung (117) der anderen Verschlussblende (110) teilweise überdeckt.

12. Winkelzubehör (100) nach einem der vorausgehenden Ansprüche, **dadurch gekennzeichnet, dass** eine (120) der Verschlussblenden an den Innenseiten (122E,123E) gegenüber ihrer Flügel (122,123) zwei hervorstehende Elemente (127) gegenüber hat, und die andere (110) der Verschlussblenden in ihren Flügeln (112,113) entsprechend die länglichen Öffnungen (117) umfasst, die sich über die Schlitze (118) an den freiliegenden Rändern (112A,113A) der Verschlussblende öffnen und durch die Flügel (122, 123) der ersten Verschlussblende (120) abgedeckt sind.

13. Winkelzubehör (100) nach einem der vorausgehenden Ansprüche, **dadurch gekennzeichnet, dass** jede Verschlussblende (110, 120) an der Innenseite (112E,113E; 122E,123E) ihrer Flügel (112,113; 122,123) an einer Ecke, die der entsprechenden Ecke eines der Flügel der anderen Verschlussblende überlagert ist, dämpfende Rillen (119;129) umfasst, die das Abtrennen eines Teils des entsprechenden Flügels erleichtern.
